(19) Europäisches Patentamt
European Patent Office
Office européen des brevets

(11) EP 4 127 116 B1

(12) # EUROPEAN PATENT SPECIFICATION

(45) Date of publication and mention of the grant of the patent:
**10.04.2024 Bulletin 2024/15**

(21) Application number: **21715219.8**

(22) Date of filing: **24.03.2021**

(51) International Patent Classification (IPC):
***C10M 169/04*** (2006.01) ***B60K 11/02*** (2006.01)
***C09K 5/10*** (2006.01) ***H05K 7/20*** (2006.01)
***B60H 1/00*** (2006.01) ***H01M 10/613*** (2014.01)
***H01M 10/6567*** (2014.01) ***C10N 20/00*** (2006.01)
***C10N 20/02*** (2006.01) ***C10N 30/10*** (2006.01)
***C10N 30/20*** (2006.01) ***C10N 40/16*** (2006.01)
***C10N 40/25*** (2006.01) ***B60K 1/00*** (2006.01)
***H01M 10/0525*** (2010.01) ***H01M 10/42*** (2006.01)
***H01M 10/625*** (2014.01)

(52) Cooperative Patent Classification (CPC):
**C10M 169/04; C09K 5/10; H01M 10/0525; H01M 10/42; H01M 10/613; H01M 10/625; H01M 10/6567;** B60K 11/02; B60K 2001/005; C10M 2203/1006; C10M 2205/173; C10M 2207/026; C10M 2215/223; C10M 2219/044; C10N 2020/011; (Cont.)

(86) International application number:
**PCT/EP2021/057625**

(87) International publication number:
**WO 2021/197974 (07.10.2021 Gazette 2021/40)**

(54) **MANAGING THERMAL RUNAWAY**

VERWALTUNG VON THERMISCHEM DURCHGEHEN

GESTION D'EMBALLEMENT THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2020 IN 202041013815**

(43) Date of publication of application:
**08.02.2023 Bulletin 2023/06**

(73) Proprietor: **Shell Internationale Research Maatschappij B.V.
2596 HR The Hague (NL)**

(72) Inventors:
- **NULL, Volker, Klaus
21107 HAMBURG (DE)**
- **PALANISAMY, Duraivelan
562149 Karnataka (IN)**
- **MAHESHWARI, Shantanu
562149 Karnataka (IN)**

(74) Representative: **Shell Legal Services IP
PO Box 384
2501 CJ The Hague (NL)**

(56) References cited:
**WO-A1-2011/113851 JP-A- 2011 201 953
JP-A- 2013 043 933**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 127 116 B1

(52) Cooperative Patent Classification (CPC): (Cont.)
C10N 2020/02; C10N 2030/10; C10N 2030/20;
C10N 2040/16; C10N 2040/25; Y02E 60/10

## Description

Field of the Invention

This invention relates to the use of immersive cooling fluids in the control and management of thermal runaway in electric batteries.

Background of the Invention

By 2040, it is expected that up to 50% of all new passenger car sales will be electric vehicles. Current battery technology relies on lithium-ion batteries and it is likely that these will remain the dominant battery technology for at least the next 15 years.

One major concern for potential car buyers of electric vehicles is 'range anxiety' concerning the limited range of electric vehicles, the lack of convenient charging stations and the time taken to recharge a vehicle. Carmakers and battery suppliers are focusing on developing more powerful lithium batteries allowing greater range and with the ability to be recharged more quickly.

However, although range is important to consumers, the thermal management of these powerful lithium-ion batteries is key to ensure the batteries remain safe and do not pose a risk to the occupants of a vehicle. Thermal management is an important challenge to the day-to-day running of a vehicle, but a pressing concern with lithium-ion batteries is the prevention of thermal runaway.

Lithium-ion batteries contain a number of cells and each of these cells contain a flammable liquid electrolyte. If a single cell short circuits, this electrolyte can combust, causing bursting of the cell and venting of the electrolyte. This creates a pocket of extreme temperature within the battery. If uncontrolled, the extreme temperature can be spread to nearby cells causing further cell failure and rupturing. This thermal runaway produces smoke, fire and, potentially, explosions, putting occupants of a vehicle at risk.

Managing thermal runaway is, therefore, a major concern to electric vehicle manufacturers. Adding protective material between cells to prevent propagation requires taking up space and weight that could otherwise be used for further cells.

The day-to-day thermal management of electric batteries has been a subject of considerable study. Historically, most cooling systems use air passed over the source of heat in order to manage excess heat. However, such systems are not capable of managing the heat produced during thermal runaway in modern battery systems.

More advanced thermal management systems have been developed in which a conventional water/glycol mixture is used as a heat transfer fluid. A battery block, containing a large number of individual battery cells, is most effectively cooled with a water/glycol mixture. This is rapidly becoming the dominant thermal management technology in use in electric vehicles sold today as it is more efficient than air-cooling. US20090023056, US20100025006 and US2011021356, in the name of Tesla Motors Inc., describe pipe systems in which about 11% percent of the cell surface are directly in contact with pipes containing coolants. In these indirect thermal management systems, the heat needs to pass through the pipe material and then the heat is transferred to the glycol/water. This limits the overall effectiveness of this heat transfer design, particularly during thermal runaway events.

Phase change materials (PCMs) are also utilized in some systems and are an effective means to take up heat while they change from solid to liquid state. PCMs are limited to the melting temperature of the selected and is not suitable for thermal management at high ambient temperatures or during thermal runaway events.

Immersive cooling has been described for a range of applications. This involves at least partially immersing a heat-generating component, such as a battery cell, in a working fluid. The heat from the heat-generating component is then removed to the working fluid which can be circulated using a pump to a heat exchanger and back. A range of fluorinated hydrocarbons have been described for this use, for example in WO2018/224908, in the name of 3M Innovative Properties Company.

JP 2011 201953 A/ JP 2013 043933 A disclose cooling fluids for lithium batteries of electric vehicles comprising a GTL base oil.

Although these methods have been demonstrated for the day-to-day thermal management of lithium-ion batteries, the heat management required during thermal runaway propagation is a different challenge and requires rapid dispersal of heat in order to prevent a catastrophic battery failure.

The provision of an improved thermal management system that allows for the management of the sort of uncontrolled temperature spikes seen when a lithium-ion cell fails would be highly advantageous and potentially lifesaving.

Brief Description of the Drawings

Figure 1 shows a section of a typical battery set up in which a number of cylindrical cells are ranged in rows.
Figure 2 shows a 1D electrostatic modelling system forming part of the basis of the modelling system used for the Examples.
Figure 3 shows the feedback loop used between the modelling system used in the Examples.
Figure 4 is charge-discharge cycle applied to each cell in the modelling system used in the Examples.
Figures 5 and 6 are graphs of the results of the Examples.

Summary of the Invention

This invention provides the use of a Fischer-Tropsch derived working fluid with a kinematic viscosity at 100°C of at most 5 $mm^2$/second in a thermal management system for a lithium-ion battery in order to rapidly disperse heat produced during a thermal runaway event.

Detailed Description of the Invention

The present inventors have surprisingly found that the use of a Fischer-Tropsch derived working fluids in thermal management systems provide improved control of a thermal runaway event. This could not be predicted from a comparison of the thermodynamic fluid data for such working fluids and other known thermal fluids.

The Fischer-Tropsch derived working fluid comprises one or more Fischer-Tropsch derived base fluids. Fischer-Tropsch derived base fluids are known in the art. By the term "Fischer-Tropsch derived" is meant that a base fluid is, or is derived from, a synthesis product of a Fischer-Tropsch process.

Fischer-Tropsch derived base fluids are often classified by the starting material in the Fischer-Tropsch process, i.e. 'X-to-liquids' or 'XTL', with X standing for said starting material. Biomass-to-liquid (BTL), coal to liquids (CTL), gas-to-liquid (GTL) and power-to-liquid (PTL) processes are some examples of Fischer-Tropsch processes producing base fluids. Preferably, the Fischer-Tropsch derived base fluid is a GTL (Gas-To-Liquids) base fluid. Suitable Fischer-Tropsch derived base fluids include oils that may be conveniently used in the Fischer-Tropsch derived working fluid are those as for example disclosed in EP0776959, EP0668342, WO97021788, WO0015736, WO0014188, WO0014187, WO0014183, WO0014179, WO0008115, WO9941332, EP1029029, WO0118156 and WO 0157166.

The Fischer-Tropsch derived base fluids for use in the invention preferably have kinematic viscosities at 100°C of at most 4 $mm^2$/s.

A particularly preferred Fischer-Tropsch derived base fluid for use in the working fluid herein is a Fischer-Tropsch derived base oil with a kinematic viscosity at 100°C in the range of from 2 to 4 $mm^2$/s, for example GTL 3 (having a kinematic viscosity at 100°C of approximately 3 $mm^2$/s), which may be prepared according to the method described in WO02070631.

Another particularly preferred Fischer-Tropsch derived base fluid for use in the working fluid herein is a Fischer-Tropsch derived base fluid produced from a gas oil stream, preferably a dewaxed gas oil stream, from a GTL process, wherein said fluid has a kinematic viscosity at 40°C in the range of from 2.0 to 11 $mm^2$/second. Preferably said Fischer-Tropsch derived base fluid produced from a gas oil stream has a kinematic viscosity at 40°C of at least 2.1 $mm^2$/second, more preferably at least 2.2 $mm^2$/second. Also preferably, said fluid has a kinematic viscosity at 40°C of at most 10.0 $mm^2$/second, more preferably at most 7.0 $mm^2$/second, most preferably at most 6.0 $mm^2$/second.

In one embodiment of the invention the working fluid comprises a mixture of more than one Fischer-Tropsch derived base fluid. For example, the working fluid may comprise both a Fischer-Tropsch derived base oil with a kinematic viscosity at 100°C in the range of from 2 to 4 $mm^2$/s and a Fischer-Tropsch derived base fluid produced from a gas oil stream.

The total amount of Fischer-Tropsch derived base fluids incorporated in the working fluid is preferably in the range of from 60.0 to 99.9 wt.%, more preferably in the range of from 65.0 to 98.0 wt.% and most preferably in the range of from 70.0 to 95.0 wt.%, with respect to the total weight of the working fluid.

Other components within the working fluid may include one or more additional base oils including mineral oils and synthetic oils. Mineral oils include liquid petroleum oils and solvent-treated or acid-treated mineral lubricating oil of the paraffinic, naphthenic, or mixed paraffinic/naphthenic type which may be further refined by hydrofinishing processes and/or dewaxing. Synthetic oils include hydrocarbon oils such as olefin oligomers (including polyalphaolefin base oils; PAOs), dibasic acid esters, polyol esters, polyalkylene glycols (PAGs), alkyl benzenes, alkyl naphthalenes and dewaxed waxy isomerates.

In one preferred embodiment, the working fluid comprises one or more additional base oils selected from alkyl benzenes, alkyl naphthalenes and mixtures thereof. If present, the one or more additional base oils selected from alkyl benzenes, alkyl naphthalenes and mixtures thereof are present in no more than 35 wt% with respect to the total weight of the working fluid. Preferably the one or more additional base oils selected from alkyl benzenes, alkyl naphthalenes and mixtures thereof are present in an amount in the range of from 1 to 30 wt% with respect to the total weight of the

working fluid.

Additionally, additives may be included in the working fluid. Suitable additives include, but are not limited to antioxidant additives, anti-static additives, corrosion inhibitors, pour point depressants and viscosity index improvers. Any other oil additive common in the art may also be used. Antioxidant and antistatic additives are particularly preferred for inclusion in the working fluid.

Suitable antioxidant additives include hindered phenolic antioxidant additives, sterically hindered monohydric, dihydric and trihydric phenols, sterically hindered dinuclear, trinuclear and polynuclear phenols.

Sterically hindered phenolic antioxidants of particular interest may be selected from the group consisting of 2,6-di-tert-butylphenol (available under the trade designation "IRGANOX TM L 140" from BASF), di tert-butylated hydroxytoluene ("BHT"), methylene-4,4'-bis-(2.6-tert-butylphenol), 2,2'-methylene bis-(4,6-di-tert-butylphenol), 1,6-hexamethylene-bis-(3,5-di-tert-butyl-hydroxyhydrocinnamate) (available under the trade designation "IRGANOX TM L109" from BASF), ((3,5-bis(1,1-dimethylethyl)-4-hydroxyphenyl)methyl)thio) acetic acid, $C_{10}$-$C_{14}$isoalkyl esters (available under the trade designation "IRGANOX TM L118" from BASF), 3,5-di-tert-butyl-4-hydroxyhydrocinnamic acid, $C_7$-$C_9$alkyl esters (available under the trade designation "IRGANOX TM L135" from BASF,) tetrakis-(3-(3,5-di-tert-butyl-4-hydroxyphenyl)-propionyloxymethyl)methane (available under the trade designation "IRGANOX TM 1010" from BASF), thiodiethylene bis(3,5-di-tert-butyl-4-hydroxyhydrocinnamate (available under the trade designation "IRGANOX TM 1035" from BASF), octadecyl 3,5-di-tert-butyl-4-hydroxyhydrocinnamate (available under the trade designation "IRGANOX TM 1076" from BASF) and 2,5-di-tert-butylhydroquinone.

Particularly preferred antioxidants for use herein are di-tert-butylated hydroxytoluene ("BHT") and $C_7$ to $C_9$ alkyl esters of 3,5-di-tert-butyl-4-hydroxyhydrocinnamic acid, (available under the trade designation "IRGANOX TM L135" from BASF).

In one embodiment of the invention, more than one antioxidant additive may be present in the working fluid. Optionally, an additional amine antioxidant, for example an alkylated or styrenated diphenylamine may be added to the working fluid.

Examples of amine antioxidants are aromatic amine anti-oxidants for example N,N'-Di-isopropyl-p-phenylenediamine, N,N'-di-sec-butyl-p-phenylenediamine, N,N'-bis(1,4-dimethyl-pentyl)-p-phenylenediamine, N,N'-bis(1-ethyl-3-methyl-pentyl)-p-phenylene-diamine, N,N'-bis(1-methyl-heptyl)-p-phenylenediamine, N,N'-dicyclohexyl-p-phenylenediamine, N,N'-diphenyl-p-phenylenediamine, N,N'-di(naphthyl-2-)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N'-cyclohexyl-N'-phenyl-p-phenylenediamine, 4-(p-toluene-sulfoamido)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-phenyl-2-naphthylamine, octylated diphenylamine, e.g. p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, di(4-methoxyphenyl)amine, 2,6-di-tert-butyl-4-dimethylamino-methylphenol, 2,4'-diaminodiphenylmethane, 4,4'-diaminodiphenylmethane, N,N,N',N'-tetramethyl-4,4'-diaminodiphenylmethane, 1,2-di(phenylamino)ethane, 1,2-di[(2-methylphenyl)amino]ethane, 1,3-di(phenylamino)-propane, (o-tolyl)biguanide, di[4-(1',3'-dimethylbutyl)phenyl] amine, tert-octylated N-phenyl-1-naphthylamine, mixture of mono- and dialkylated tert-butyl-/tert-octyldiphenylamines, 2,3-dihydro-3,3-dimethyl-4H-1,4-benzothiazine, phenothiazine, N-allylphenothiazine, tert-octylated phenothiazine, 3,7-di-tert-octylphenothiazine. Also possible amine antioxidants are those according to formula VIII and IX of EP-A-1054052, which compounds are also described in US-A-4,824,601.

The total amount of the one or more antioxidant additives present in the working fluid is preferably at least 0.1 wt%, more preferably at least 0.15 wt% and preferably at most 3.0 wt%, more preferably at most 2.0 wt% with respect to the total weight of the working fluid.

Suitable antistatic additives include those selected from those containing alkyl substituted naphthalene sulfonic acids, benzotriazole and substituted benzotriazoles.

Substituted benzotriazole compounds may be represented by the formula (I).

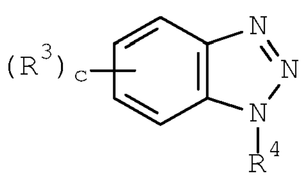

(I)

wherein $R^4$ may be hydrogen or a group represented by the formula (II)

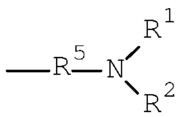

(II)

or by the formula (III)

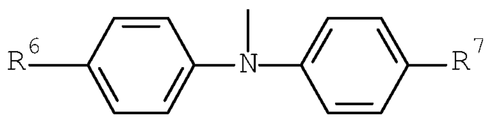

(III)

wherein:

c is 0, 1, 2 or 3;

$R^1$ and $R^2$ are hydrogen or the same or different straight or branched alkyl groups of 1-18 carbon atoms, preferably a branched alkyl group of 1-12 carbon atoms; $R^3$ is a straight or branched $C_{1-4}$ alkyl group, preferably $R^3$ is methyl or ethyl and C is 1 or 2; $R^5$ is a methylene or ethylene group; $R^6$ and $R^7$ are the same or different alkyl groups of 3-15 carbon atoms, preferably of 4-9 carbon atoms.

Preferred compounds are 1-[bis(2-ethylhexyl) - aminomethyl]benzotriazole, methylbenzotriazole, dimethylbenzotriazole, ethylbenzotriazole, ethylmethylbenzotriazole, diethylbenzotriazole and mixtures thereof. Other preferred compounds include (N-Bis(2-ethylhexyl)-aminomethyl-tolutriazole, non-substituted benzotriazole, and 5-methyl-1H-benzotriazole.

Preferred alkyl substituted naphthalene sulfonic acids include di C8-C10, branched, C rich, alkylnaphthalene sulphonic acid, such as those commercially available as "STADIS 450" from Innospec.

The content of the above antistatic additive in the working fluid herein is preferably above 0,5 mg/kg and more preferably above 1 mg/kg with respect to the total weight of the working fluid. A practical upper limit may vary depending on the specific application of the lubricating composition. This concentration may be up to 3 wt. %, preferably however in the range of from 1 mg/kg to 1 wt. % with respect to the total weight of the working fluid. However, such compounds may be advantageously used at concentrations below 1000 mg/kg and more preferably below 300 mg/kg with respect to the total weight of the working fluid.

The working fluid preferably has a pour point of less than or equal to -40°C, more preferably less than or equal to -50°C, measured according to ISO 3016.

The working fluid also preferably has a flash point of at least 100°C, more preferably at least 110°C, most preferably at least 120°C, and preferably at most 240°C, according to ASTM D93.

The working fluid preferably has a kinematic viscosity at 40°C of at least 2.0 $mm^2/s$, more preferably at least 2.1 $mm^2/s$, most preferably at least 2.2 $mm^2/s$, measured according to ISO 3104. The working fluid preferably has a kinematic viscosity at 40°C of at most 22.0 $mm^2/s$, more preferably at most 11.0 $mm^2/s$, most preferably at most 10.0 $mm^2/s$.

The thermal conductivity of the working fluid at 20°C is preferably at least 0.135 w/mK, preferably at least 0.14 w/mK, most preferably at least 0.143 w/mK, measured according to ASTM D7896.

The specific heat capacity of the working fluid at 20°C, according to ASTM D 1269, is preferably at least 1.9 W/m*K, more preferably at least 2.0 W/m*K, most preferably at least 2.1 W/m*K.

## Detailed Description of the Drawings

In Figure 1, a section of a battery is shown. This section is shown to contain 10 individual cylindrical cells (shown cut away) numbered 1 to 10.

Figure 2, provides an illustration of the 1D electrostatic model used as part of the modelling system used in the Examples below. In Figure 2, 11 is the anode; 12 is the cathode; 13 represents discharging; and 14 represents charging.

Figure 3 illustrates the interplay between the models used in the modelling process of the Examples below. In Figure 3, 15 represents the 3D Flow Model; 16 is the 3D thermal model and 17 is the single Particle Model (SPM).

Figure 4 is a charge-discharge curve used in the models of the Examples.

Figures 5 and 6 provide plots of temperature against time for Cell 1 (using the cell numbering from Figure 1) in Figure 5 and Cell 3 (using the cell numbering from Figure 1) in Figure 6.

The invention and the Figures will now be further described in relation to the following, non-limiting examples.

Examples

1. Modelling

The software used for the modelling work was COMSOL Multiphysics version 5.4. The electrochemistry of the battery, the flow and heat transfer with the fluid surrounding the battery was achieved through three set of physics modules in software, namely Laminar Flow; Heat Transfer in Fluids; and Single Particle Battery.

1.1 Flow Model

The Flow Model was applied in the region where fluid is present. The module computes the flow by solving the following Navier-Stokes equations:

$$1.\ \frac{\partial \rho}{\partial t} + \nabla \cdot (\rho \boldsymbol{u}) = 0$$

$$2.\ \rho \frac{\partial \boldsymbol{u}}{\partial t} + \rho(\boldsymbol{u} \cdot \nabla)\boldsymbol{u} = \nabla \cdot [-p\boldsymbol{I} + \tau]$$

where $\rho$ is the density (kg/m3), u is the velocity vector (m/s), $p$ is pressure (Pa), $\tau$ is the viscous stress tensor (Pa). Equation 1, 2 solve for conservation of mass and momentum respectively.

The fluid was simulated with the incompressible flow option and no slip boundary condition for the wall.

1.2 Thermal Model

The thermal Model computed the transfer of heat using the following conversation of energy equation:

$$3.\ \rho C_p \left(\frac{\partial T}{\partial t} + (\boldsymbol{u} \cdot \nabla)T\right) = -(\nabla \cdot \boldsymbol{q}) + Q$$

where $C_p$ is the specific heat capacity (J/(kg·K)), $T$ is the absolute temperature (K), $q$ is the heat flux vector (W/m2), Q contains the heat sources (W/m3).

1.3 Single Particle Model (SPM)

The Single Particle Battery interface computes the voltage and current profiles assuming a Single Particle Model (SPM) (see Figure 2) for both the electrodes with diffusion and intercalation kinetics while the electrolyte is considered as a lumped resistive element.

$$4.\quad E_{battery} = E_{anode} - E_{cathode} + \Delta\emptyset_l$$

where $E_{battery}$, $E_{anode}$, $E_{cathode}$ are the potential of the battery, anode and cathode (Volts) respectively, $\Delta\emptyset_l$ is the potential difference across the electrolyte solution (Volts).

The current across the electrolyte is given by:

$$5.\quad I_{battery} = {\Delta\emptyset_l * A_{sep}}/{R_{elec}}$$

where $R_{elec}$ is the resistance of the electrolyte ($\Omega$·m2) and $A_{sep}$ is area of the separator.

The current across the electrode is given by:

$$6.\quad I_{battery} = E_{electrode}\left(\sum_{m} A_m i_{intercal,m}\right)$$

where $A_m$ is the active material surface area (m2) and $i_{intercal,m}$ is the intercalation current for the chemical specie, m (Ampere).

The diffusion of the active material in the electrode is considered through the Fick's law equation:

$$7.\quad \frac{\partial c_s}{\partial t} = -\nabla \cdot (-D_s \nabla c_s)$$

with the following boundary conditions $\frac{\partial c_s}{\partial r} = 0|_{r=0}$ and $-D_s \frac{\partial c_s}{\partial r} =$

$$-R_{s\theta}|_{r=R_a,R_c}$$

where $c_s$ is the concentration of the active specie in the electrode (mol/m3), $D_s$ is the solid phase diffusion coefficient (m2/s), $R_a$, $R_c$ are the radius of the anode and cathode particle respectively (m) and $R_{s\theta}$ is flux of active particle in electrode surface (mol/(m2·s)).

The heat generated by the electrodes and electrolyte ohmic heating are given by

$$8.\quad Q_{h,electrode} = \varepsilon_{electrode} \sum_{m} A_m i_{intercal,m}\left(E - E_{eq,m} + T\frac{\partial E_{eq,m}}{\partial T}\right)$$

$$9.\quad Q_{h,electrolyte} = {I_{battery} * \Delta\emptyset_l}/{E_{battery}}$$

where $\varepsilon_{electrode}$ is the electrode fractional volume in battery, $E_{eq,m}$ is the equilibrium potential of the chemical species, m (Volt).

1.4 Combination of Models

Thus, equations 1 and 2 define the flow model, equation 3 is the thermal model and equations 4 to 9 demonstrate the SPM for a single cell. Figure 3 shows how the different models are coupled to each other. SPM simulate the charge and mass transfer inside the cell together with the temperature dependent reaction kinetics at the electrodes. The average heat generated by the individual cell ($Q_h$) due to the electrode reactions and electrical resistance was calculated from the SPM using Equations 8 and 9. $Q_h$ was supplied as the heat source to the Thermal Model that computes the temperature distribution over the cylindrical cells and the fluid. Flow model has been used to calculate the velocity of the coolant which takes away heat from the surface of the cells. We have coupled the Flow Model and the Thermal Model in one direction only where velocity calculated by Flow Model affects the temperature distribution of the fluid and not vice-versa. Once the temperature distribution is solved, the average of the temperature over each individual cell is calculated. This temperature in turn is fed back into the SPM thereby coupling the two models as depicted in the flow diagram (see Figure 3).

1.5 Model setup

Ten cylindrical cells have been used for our simulations and each cell's electrochemistry is modelled by SPM. Cells are partially submerged in liquid coolant as shown in Figure 1.

Inlet flow velocity was prescribed for all the example fluids considered corresponding to mass flow rate of 0.06 kg/s.

The symmetry boundary conditions were used on two sides perpendicular to the inlet-outlet flow direction so

that the periodic images can capture effect of an extended pack like geometry.

The Flow Model was initially solved to get a stationary flow solution. This stationary solution was used for time-dependent simulations as we have coupled the Flow Model only in one direction. The time-dependent temperature field was then computed by first initializing the 1st cell in the arrangement to an initial temperature of 673 Kelvin. All the cells where initialized in the fully charged state and subjected to charge-discharge cycle at 2-C rate with set minimum and maximum operating voltage of 3.5 and 4.3 Volts respectively. The time-dependent solver was simulated for a duration of 4000 seconds corresponding to charge-discharge curve (see Figure 4).

Example 1 and Comparative Example 2

Two fluids have been simulated using the combined mathematical models described above and their performance was analysed to prevent thermal runaway situation inside the battery pack. Fluid 1 (Example 1) is Fischer-Tropsch derived working fluid consisting of a Fischer-Tropsch derived gas oil and fluid 2 (Comparative Example 2) is Novec 7300 (a hydroflouroether commercially available from 3M) .

The properties of each fluid are shown in Table 1 below:

Table 1

| **Fluid** | Method | Unit | **Example 1** | **Example 2** |
|---|---|---|---|---|
| Density @ 25°C | ISO 12185 | kg/m3 | 775 | 1660 |
| Density @ 40°C | ISO 12185 | kg/m3 | 759 | 1620 |
| Density @ 100°C | ISO 12185 | kg/m3 | 720 | 1490 |
| Kinematic viscosity @ 25°C | ISO 3104 | mm2/s | 3,2 | 0,71 |
| Kinematic viscosity @ 40°C | ISO 3104 | mm2/s | 2,3 | 0,5 |
| Kinematic viscosity @ 100°C | ISO 3104 | mm2/s | 0,97 | 0,2 |
| Thermal conductivity @ 25°C | PLTL-73 | W/mK | 0,149 | 0,066 |
| Thermal conductivity @ 40°C | PLTL-73 | W/mK | 0,148 | 0,063 |
| Thermal conductivity @ 100°C | PLTL-73 | W/mK | 0,143 | 0,057 |
| Specific heat capacity @ 25 °C | ASTM E1269 | kJ/kgK | 2,3 | 1,14 |
| Specific heat capacity @ 40 °C | ASTM E1269 | kJ/kgK | 2,37 | 1,16 |
| Specific heat capacity @ 100 °C | ASTM E1269 | kJ/kgK | 2,66 | 1,27 |

Figure 5 shows the maximum temperature of first cell (1) as a function of time, which had been initialized to 673 K at time t = 0s. The temperature is lowered somewhat more in inventive Example 1 (with the Fischer-Tropsch derived working fluid., that is the cell (1) reaches a lower temperature at any given time in the case of Example 1.

Figure 6 shows the maximum temperature of the third cell (3) as a function of time. Heat from first cell (1) gets transported by the flow of the coolant which results in rise of the temperature of third cell (3). Figure 6 clearly shows that temperature of third cell (3) is much lower in case of Example 1 when compared to Comparative Example 2 at any point of time and at a fixed mass flow rate of both coolants. This plot clearly demonstrates that using the fluid according to the invention is much better in preventing propagation of thermal runaway from one cell to another in the battery pack. The fluid of Example 1 can dissipate heat much faster than that of comparative Example 2. This can potentially avoid thermal hotspots to enhance battery life and prevent fire/explosion in extreme situations.

## Claims

1. The use of a Fischer-Tropsch derived working fluid with a kinematic viscosity at 100°C of at most 5 $mm^2$/second in a thermal management system for a lithium-ion battery in order to provide improved control of a thermal runaway event.

2. The use according to Claim 1, wherein the Fischer-Tropsch derived working fluid comprises a Fischer-Tropsch derived base fluid which is a GTL base oil with a kinematic viscosity at 100°C of at most 4 $mm^2$/second.

3. The use according to Claim 1, wherein the Fischer-Tropsch derived working fluid comprises a Fischer-Tropsch derived base fluid which is produced from a dewaxed gas oil stream in a Fischer-Tropsch process and has a kinematic viscosity at 40°C in the range of from 1 to 10 mm/second.

4. The use according to any one of Claims 1 to 3, wherein the total amount of Fischer-Tropsch derived base fluid incorporated in the working fluid is preferably in the range of from 60.0 to 99.9 wt.%.

5. The use according to any one of Claims 1 to 4, wherein the Fischer-Tropsch derived working fluid also comprises one or more additional base oils selected from alkyl benzenes, alkyl naphthalenes, esters and mixtures thereof.

6. The use according to any one of Claims 1 to 5, wherein the Fischer-Tropsch derived working fluid also comprises an antioxidant additive selected from the group of hindered phenolic antioxidant additives, sterically hindered monohydric, dihydric and trihydric phenols, sterically hindered dinuclear, trinuclear and polynuclear phenols.

7. The use according to Claim 6, wherein the antioxidant additive is selected from di-tert-butylated hydroxytoluene ("BHT") and $C_7$ to $C_9$ alkyl esters of 3,5-di-tert-butyl-4-hydroxyhydrocinnamic acid.

8. The use according to any one of Claims 1 to 7, wherein the Fischer-Tropsch derived working fluid also comprises an antistatic additive selected from those containing alkyl substituted naphthalene sulfonic acids, benzotriazole and substituted benzotriazoles.

9. The use according to Claim 8, wherein the content of the antistatic additive in the working fluid herein is above 0.5 mg/kg and no more than 3 wt%.

10. The use according to any one of Claims 1 to 9, wherein the thermal conductivity of the working fluid at 20°C is at least 0.135 w/mK.

**Patentansprüche**

1. Verwendung eines Fischer-Tropsch-abgeleiteten Arbeitsfluids mit einer kinematischen Viskosität bei 100 °C von höchstens 5 mm2/Sekunde in einem thermischen Managementsystem für eine Lithium-Ionen-Batterie, um eine verbesserte Steuerung eines Ereignisses eines thermischen Durchgehens bereitzustellen.

2. Verwendung nach Anspruch 1, wobei das Fischer-Tropsch-abgeleitete Arbeitsfluid ein Fischer-Tropschabgeleitetes Basisfluid umfasst, das ein GTL-Basisöl mit einer kinematischen Viskosität bei 100 °C von höchstens 4 mm2/Sekunde ist.

3. Verwendung nach Anspruch 1, wobei das Fischer-Tropsch-abgeleitete Arbeitsfluid ein Fischer-Tropschabgeleitetes Basisfluid umfasst, das aus einem entwachsten Gasölstrom in einem Fischer-Tropsch-Verfahren hergestellt wird und eine kinematische Viskosität bei 40 °C in dem Bereich von 1 bis 10 mm/Sekunde aufweist.

4. Verwendung nach einem der Ansprüche 1 bis 3, wobei die Gesamtmenge des Fischer-Tropsch-abgeleiteten Basisfluids, das in dem Arbeitsfluid eingebunden ist, vorzugsweise in dem Bereich von 60,0 bis 99,9 Gew.-% liegt.

5. Verwendung nach einem der Ansprüche 1 bis 4, wobei das Fischer-Tropsch-abgeleitete Arbeitsfluid ebenso ein oder mehrere zusätzliche Basisöle umfasst, die aus Alkylbenzolen, Alkylnaphthalinen, Estern und Mischungen davon ausgewählt sind.

6. Verwendung nach einem der Ansprüche 1 bis 5, wobei das Fischer-Tropsch-abgeleitete Arbeitsfluid ebenso ein Antioxidationsmitteladditiv umfasst, das aus der Gruppe von gehinderten phenolischen Antioxidationsmitteladditiven, sterisch gehinderten monohydrischen, dihydrischen und trihydrischen Phenolen, sterisch gehinderten dinuklearen, trinuklearen und polynuklearen Phenolen ausgewählt ist.

7. Verwendung nach Anspruch 6, wobei das Antioxidationsmitteladditiv aus di-tert-butyliertem Hydroxytoluol ("BHT") und C7 bis C9-Alkylestern von 3,5-di-tert-Butyl-4-hydroxyhydrozimtsäure ausgewählt ist.

8. Verwendung nach einem der Ansprüche 1 bis 7, wobei das Fischer-Tropsch-abgeleitete Arbeitsfluid ebenso ein

antistatisches Additiv umfasst, das aus solchen ausgewählt ist, die alkylsubstituierte Naphthalinsulfonsäuren, Benzotriazol und substituierte Benzotriazole enthalten.

9. Verwendung nach Anspruch 8, wobei der Gehalt des antistatischen Additivs in dem Arbeitsfluid hierin über 0,5 mg/kg und nicht mehr als 3 Gew.-% liegt.

10. Verwendung nach einem der Ansprüche 1 bis 9, wobei die thermische Leitfähigkeit des Arbeitsfluids bei 20 °C mindestens 0,135 w/mK beträgt.

**Revendications**

1. Utilisation d'un fluide de travail dérivé de Fischer-Tropsch avec une viscosité cinématique à 100 °C d'au plus 5 $mm^2$/seconde dans un système de gestion thermique destiné à une batterie lithium-ion afin de fournir une régulation améliorée d'un événement d'emballement thermique.

2. Utilisation selon la revendication 1, dans laquelle le fluide de travail dérivé de Fischer-Tropsch comprend un fluide de base dérivé de Fischer-Tropsch qui est une huile de base GTL avec une viscosité cinématique à 100 °C d'au plus 4 $mm^2$/seconde.

3. Utilisation selon la revendication 1, dans laquelle le fluide de travail dérivé de Fischer-Tropsch comprend un fluide de base dérivé de Fischer-Tropsch qui est produit à partir d'un courant de gazole déparaffiné dans un processus Fischer-Tropsch et a une viscosité cinématique à 40 °C dans la plage allant de 1 à 10 mm/seconde.

4. Utilisation selon l'une quelconque des revendications 1 à 3, dans laquelle la quantité totale de fluide de base dérivé de Fischer-Tropsch incorporée dans le fluide de travail est de préférence dans la plage allant de 60,0 à 99,9 % en poids.

5. Utilisation selon l'une quelconque des revendications 1 à 4, dans laquelle le fluide de travail dérivé de Fischer-Tropsch comprend également une ou plusieurs huiles de base supplémentaires choisies parmi alkylbenzènes, alkylnaphtalènes, esters et mélanges de ceux-ci.

6. Utilisation selon l'une quelconque des revendications 1 à 5, dans laquelle le fluide de travail dérivé de Fischer-Tropsch comprend également un additif antioxydant choisi dans le groupe d'additifs antioxydants phénoliques encombrés, phénols monohydriques, dihydriques et trihydriques stériquement encombrés, phénols dinucléaires, trinucléaires et polynucléaires stériquement encombrés.

7. Utilisation selon la revendication 6, dans laquelle l'additif antioxydant est choisi parmi hydroxytoluène di-tert-butylé (« BHT ») et esters alkyliques en $C_7$ à $C_9$ d'acide 3,5-di-tert-butyl-4-hydroxyhydrocinnamique.

8. Utilisation selon l'une quelconque des revendications 1 à 7, dans laquelle le fluide de travail dérivé de Fischer-Tropsch comprend également un additif antistatique choisi parmi ceux contenant des acides naphtalènesulfoniques à substitution alkyle, du benzotriazole et des benzotriazoles substitués.

9. Utilisation selon la revendication 8, dans laquelle la teneur en additif antistatique dans le fluide de travail ici est supérieure à 0,5 mg/kg et ne dépasse pas 3 % en poids.

10. Utilisation selon l'une quelconque des revendications 1 à 9, dans laquelle la conductivité thermique du fluide de travail à 20 °C est d'au moins 0,135 w/mK.

Figure 1

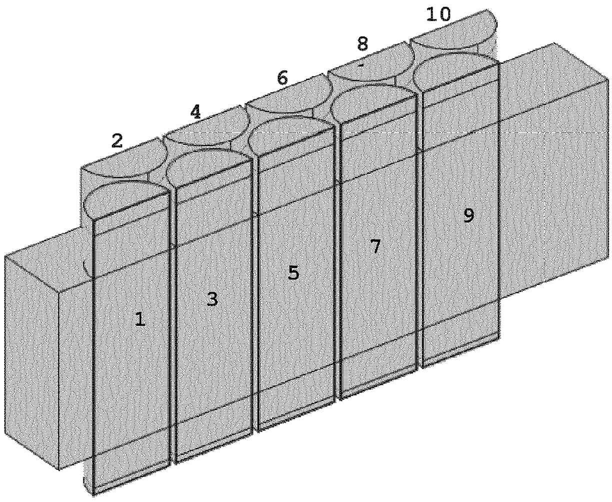

Figure 2

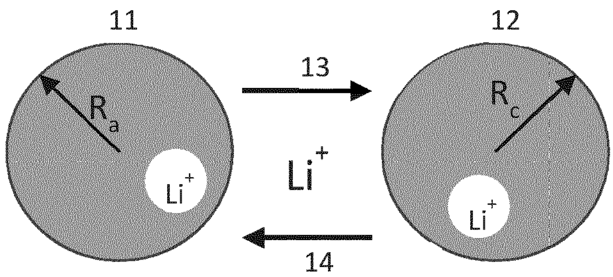

Figure 3

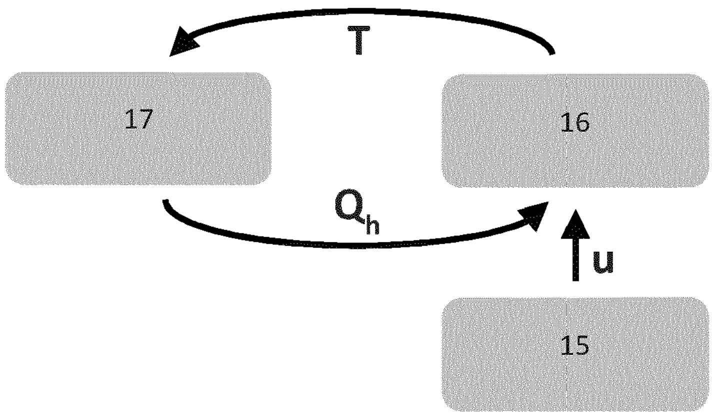

Figure 4

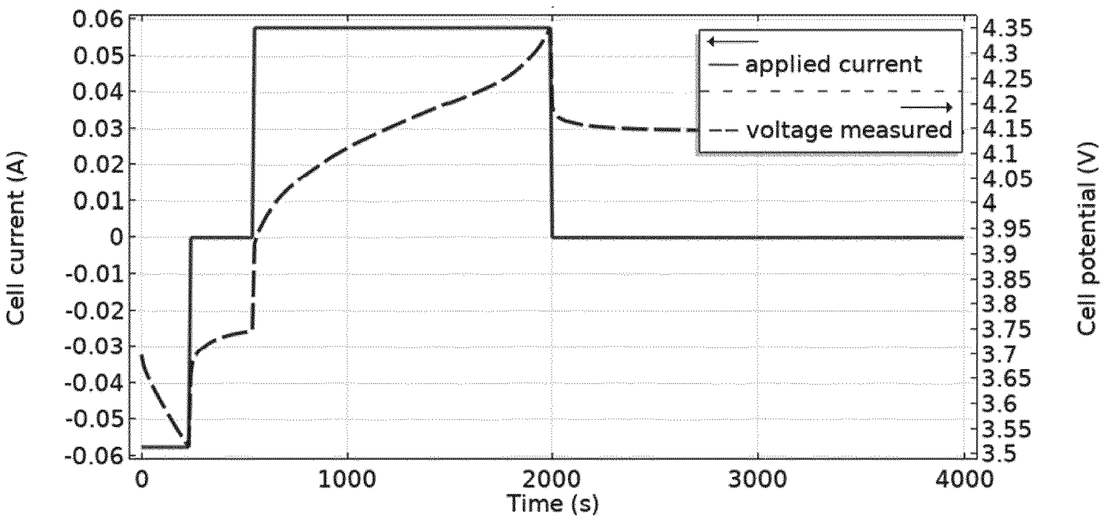
0.06
0.05
0.04
0.03
0.02
0.01
0
-0.01
-0.02
-0.03
-0.04
-0.05
-0.06
Cell current (A)
0
1000
2000
3000
4000
Time (s)
applied current
voltage measured
4.35
4.3
4.25
4.2
4.15
4.1
4.05
4
3.95
3.9
3.85
3.8
3.75
3.7
3.65
3.6
3.55
3.5
Cell potential (V)

Figure 5

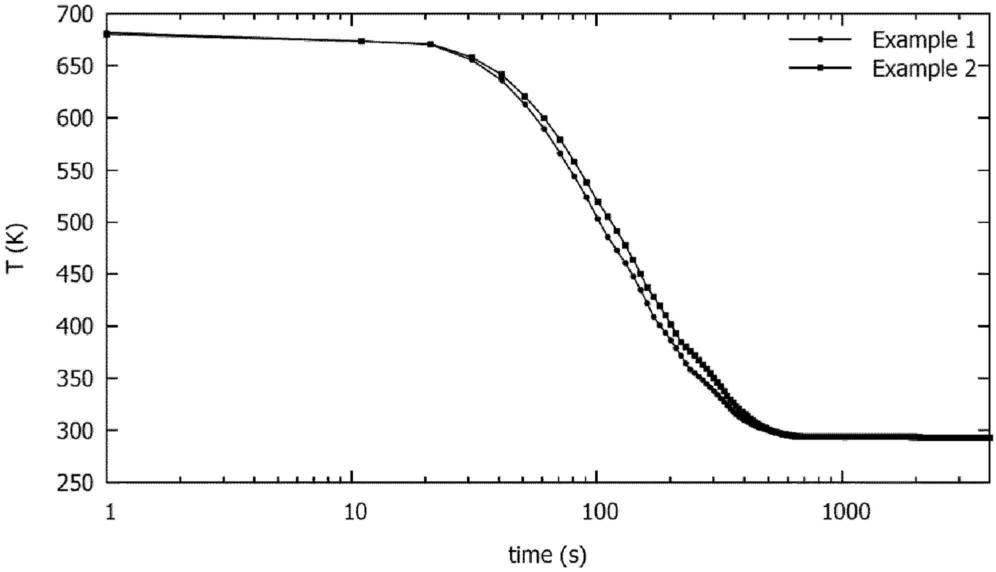
700
650
600
550
500
450
400
350
300
250
T (K)
1
10
100
1000
time (s)
Example 1
Example 2

Figure 6

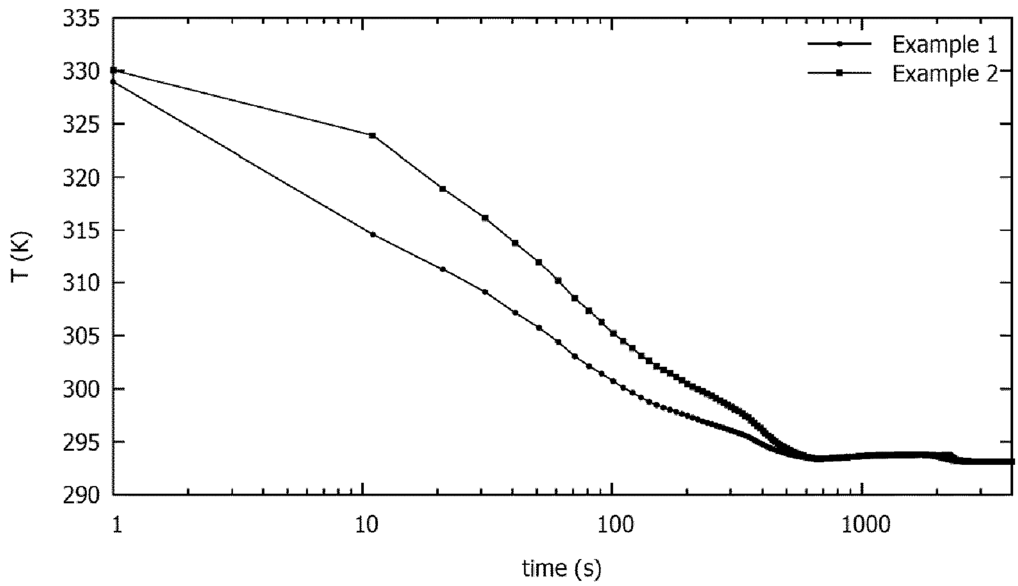
335
330
325
320
315
310
305
300
295
290
T (K)
1
10
100
1000
time (s)
Example 1
Example 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20090023056 A
- US 20100025006 A
- US 2011021356 A
- WO 2018224908 A
- JP 2011201953 A
- JP 2013043933 A
- EP 0776959 A
- EP 0668342 A
- WO 97021788 A
- WO 0015736 A
- WO 0014188 A
- WO 0014187 A
- WO 0014183 A
- WO 0014179 A
- WO 0008115 A
- WO 9941332 A
- EP 1029029 A
- WO 0118156 A
- WO 0157166 A
- WO 02070631 A
- EP 1054052 A
- US 4824601 A